# EUROPEAN PATENT APPLICATION

(11) **EP 2 003 849 A2**
(43) Date of publication of application: **17.12.2008**
(21) Application number: 08160258.3
(22) Date of filing: 21.11.2006
(51) Int. Cl.: H04L 29/06

(54) **System and method for mobile digital media content delivery and services marketing**

(30) Priority: 23.11.2005 US 738969 P; 11.01.2006 US 757895 P; 24.01.2006 US 761372 P; 07.04.2006 US 789900 P
(62) Divisional of application: 06838224.1
(71) Applicant: Envio Networks Inc., Andover MA 01810 (US)
(72) Inventor: VISHWANATHAN, Kumar K., Windham, NH 03087 (US); IYER, Prakash, R., Andover, MA 01845 (US); SUNDAR, Rangamani, Windham, NH 03087 (US)
(74) Representative: Cole, Douglas Lloyd

(57) **Abstract**

A method for establishing communication between two or more mobile communication device users is disclosed. Data comprising personal profile information of each of a plurality of mobile communication device users is stored. Locations of the mobile communication devices are monitored. When two or more mobile communication devices are determined to be in close proximity, the personal profile information for the two or more mobile communication device users is compared. An alert is transmitted to one or more of the mobile communication devices when the comparison indicates a match between personal profile information of the associated mobile communication device users. The alert indicates to a user of the mobile communication device about the proximity of a mobile communication device user with matching profile information.

## Description

### RELATED APPLICATIONS

This application claims priority to U.S. Provisional Application No. 60/738,969, filed November 23, 2005; to U.S. Provisional Application No. 60/757,895, filed January 11, 2006; to U.S. Provisional Application No. 60/761,372, filed January 24, 2006; and to U.S. Provisional Application No. 60/789,900, filed April 7, 2006. The entirety of each of these applications is incorporated herein by reference.

### FIELD OF THE INVENTION

The present invention is directed to mobile communication devices and services, and more particularly to delivering context based multiple concurrent applications or services to a mobile communication device.

### BACKGROUND OF THE INVENTION

Mobile communication devices, e.g. cellular phones, are becoming more data centric and less voice centric and the modern mobile lifestyle is changing rapidly. Indeed, in many countries, the mobile phone is the "primary screen" in the household instead of a laptop or desktop computer.

Nevertheless, today's mobile communication services are not capable of providing multiple concurrent applications to a mobile communication device. In addition, the context of a mobile device user's activity is known by network entities and this contextual knowledge can be used to improve the mobile device user's experience and also provide a means to deliver advertising content to the mobile device user.

### SUMMARY OF THE INVENTION

Briefly, techniques are provided for delivering content to mobile communication devices. In one embodiment, a communication session involving a mobile communication device is detected. One or more context parameters associated with the communication session are determined. Then, based on the context parameters, content is retrieved or generated for delivery to the communication device while the communication session is ongoing. The communication session may be a voice call, mobile gaming application, website browsing application, instant messaging session, etc. The context parameters that are determined for the communication session depend on the type of communication session. For example, if the communication session is a voice call, the context parameters may include one or more of: calling number associated with the voice call, time of day of the voice call, and a called number associated with a voice call. The context parameters are useful to search for relevant content that can be presented to a mobile communication device user. The relevant content may be determined from user preferences (based on past user activity or user specified preferences), a search for relevant content using one or more search engines services, services that the mobile communication device user has subscribed to.

The manner or mode in which the relevant content is presented to the mobile communication device user may vary. For example, the relevant content may be displayed in a manner based on the wireless services the mobile communication device user has subscribed to, displayed based on location of the mobile communication device and its proximity to other mobile communication device users that have matching personal profile information in a social community service provided by a service provider, or displayed based on a mobile communication device user's query for certain information and associated search results.

Thus, according to another embodiment, the context parameters of the communication session are used to automatically generate one or more search terms. The search terms are then supplied to a search engine that executes a search based on the search terms. Content retrieved as a result of the search is presented to the mobile communication device.

According to still another embodiment, a communication technique is provided that involves storing data comprising personal profile information for each of a plurality of mobile communication device users and enabling communication between two or more users when they are determined to be in close proximity and their personal profile information indicates potential compatibility. Locations of mobile communication devices participating in the communication service are monitored. When two or more mobile communication devices are determined to be in close proximity, the personal profile information for the corresponding two or more mobile communication device users is compared. An alert is transmitted to one of the two or more communication devices when it is determined that the corresponding personal profile information indicates potential compatibility of the two or more associated mobile communication device users. The alert may indicate to a user of one of the mobile communication devices about the proximity of another potentially compatible mobile communication device user.

Objects and advantages of the techniques described herein will become more readily apparent when reference is made to the following description taken in conjunction with the accompanying drawings.

### BRIEF DESCRIPTION OF THE DRAWINGS

FIG. 1 is a high level block diagram showing a mobile communication system that is enhanced according to the techniques of the invention described herein to deliver concurrent applications to mobile communication devices.
FIG. 2 is a high level data flow diagram showing a concurrency application server that communications with a library component in a mobile device according to the present invention.
FIG. 3 is a block diagram of a mobile communication useful in accordance with the embodiments of the present invention.
FIG. 4 is a block diagram of the software architecture of the concurrency application system according to the present invention.
FIG. 5 is a diagram illustrating data flow for a context-based media content delivery method according to one embodiment of the present invention.
FIGs. 6-9 are diagrams illustrating data flow for exemplary applications for the context-based media content delivery method according embodiments of the present invention.
FIG. 10 is a flow chart for a method for delivering targeted content to a mobile communication device according to another embodiment of the invention.
FIG. 11 is a flow diagram depicting an automated content search method according to still another embodiment of the present invention.
FIG. 12 is a flow chart for the automated content search method shown in FIG. 11, according to an embodiment of the present invention.

### DETAILED DESCRIPTION

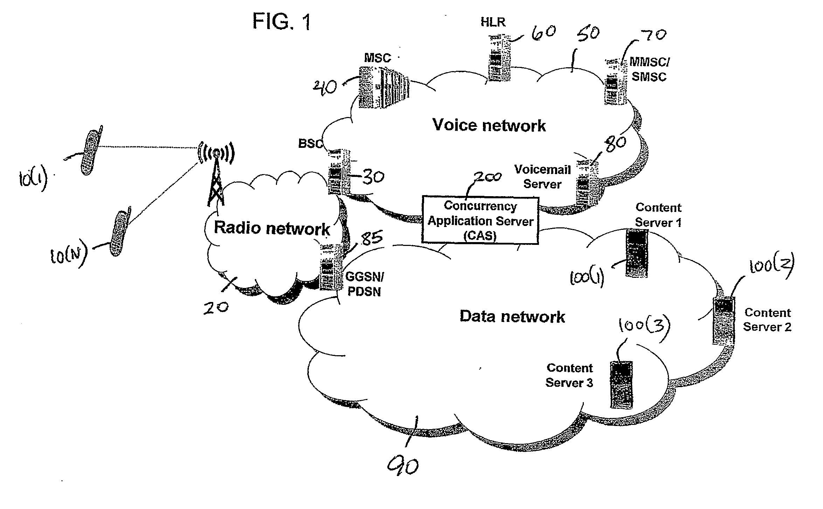

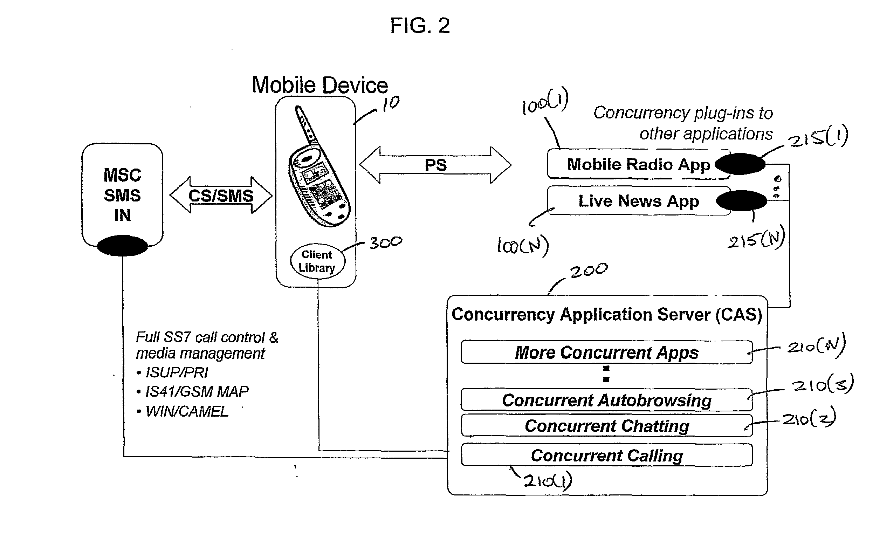

Referring first to FIGs. 1 and 2, the system and method for delivering digital content to mobile devices will be described. The mobile communication devices are shown at reference numeral 10(1) to 10(N) and may be cellular phone or other wireless communication devices that have sufficient display and user interface capability beyond simple telephony functions. Such devices are currently available and they have capabilities including mobile web browsing, mobile instant messaging and related capabilities. However, there is no capability heretofore known for providing concurrent applications to the mobile communication device so that the user can be placing or having a voice call and concurrently receiving other content or engaging in another communication related activity that is displayed on the display screen of the mobile device, or vice versa.

As is known in the art, mobile communication devices 10(1)-10(N) achieve a wireless radio communication link via a radio network 20 to base station control centers (BSCs) 30 and the BSCs 30 are in turn connected to a mobile switching center (MSC) 40 that is part of a voice network 50. Also in the voice network 50 is a home location register (HLR) 60 and a multimedia messaging service center/short message service center (MMSC/SMSC) 70 and a voicemail server 80. The MMSC/SMSC 70 handles processing of data messages to/from a mobile communication device. The radio network 20 is also connected to a data or packet network 90 by a GSM gateway serving node (GGSN)/packet data serving node (PDSN) 85. The data network 90 may include content servers 100(1), 100(2) and 100(3) that are accessible via the WWW for digital content.

According to the present invention, a mobile content system is provided that comprises a concurrency application server (CAS) 200 and a small client library 300 also called a concurrency application plug-in that resides in the mobile devices 10(1) to 10(N). The CAS 200 interfaces with equipment in the voice network 50 and equipment in the data network 90, e.g., the Internet. A mobile device 10(i) equipped with the concurrency application plug-in is said to be a concurrency-enabled mobile device. Thus, any currently available or hereinafter developed mobile device having the aforementioned user interface capabilities may be made concurrency-enabled by installing the client library 300 or otherwise configured with the functionality of the client library 300 as described herein. For example, the client library functionality may made part of the operating system of a mobile device.

The CAS 200 comprises an interface function (described hereinafter) that detects incoming calls or communication sessions that may be originate from an MSC or MMSC/SMSC. Depending on which concurrent applications the mobile device user has subscribed, the CAS 200 activates a mobile application. The CAS 200 comprises a plurality of mobile applications 210(1) to 210(N) that can be running concurrently in cooperation with a client library 300 on any number of mobile devices 10. Examples of mobile applications include a voice calling application 210(1), voice mail application 210(2), chatting application 210(3) and autobrowsing application 210(4). Additional mobile applications are described hereinafter. The mobile applications 210(1) to 210(N) may interface with third party applications 110(1) to 110(N) which may include, for example, a mobile radio application 110(1) and a live news application 110(N), as well as a mobile gaming application 120(1). The CAS 200 comprises concurrent application plug-ins 215(1) to 215(M) to enable interaction between the CAS applications and the third party applications.

A concurrent mobile application may be initiated by the CAS 200 as explained above or by the mobile device as well. For example, the client library 3 00 on the mobile device may activate a mobile application based on an incoming call or certain incoming message notifications. Thus, the mobile device or the CAS 200 may detect the need for concurrency and activate a mobile application concurrent with an already activated mobile application.

The functions of the CAS 200, such as the content delivery functions described herein, may be embodied by one or more computer program instructions that, when executed by computer processor, cause the computer processor to perform the functions that are described herein.

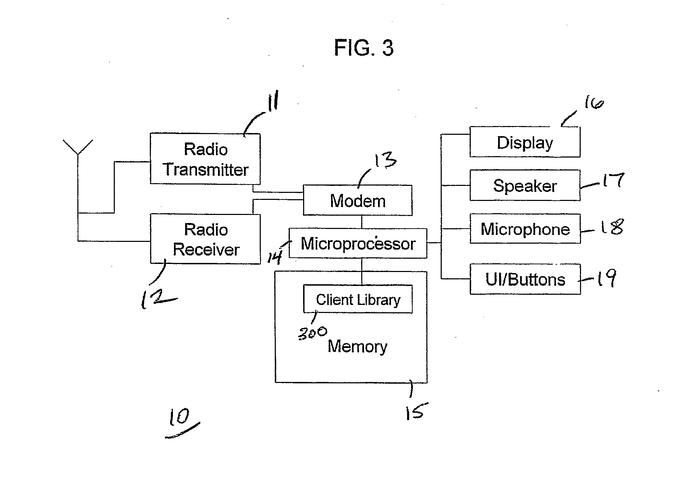

FIG. 3 illustrates a block diagram of a mobile device 10 according to one embodiment. The mobile device 10 comprises a radio transmitter 11, a radio receiver 12, a modem (baseband signal processor) 13, microprocessor 14, memory 15 and a variety of user interface components such as a display 16, speaker 17, microphone 18 and user interface buttons 19. The functions of many of the components are well known in the art and are therefore not described in detail herein. The client library 300 is installed in the memory 15. In addition to the client library 300, the memory 15 stores other software programs that are executed by the microprocessor 14 to provide the various mobile device functions to the user and coordinate cooperation with the CAS 200. The mobile device 10 need have only one instance each of a radio transmitter 11 and a radio receiver 12 to provide for multiple concurrent mobile applications to the device user. No modification to the hardware of a mobile device is necessary to achieve the concurrent mobile application functionality described herein. Moreover, no modification of the over-the-air communication protocol (between a mobile device and the radio network 20) is necessary to provide the concurrent application functionality described herein.

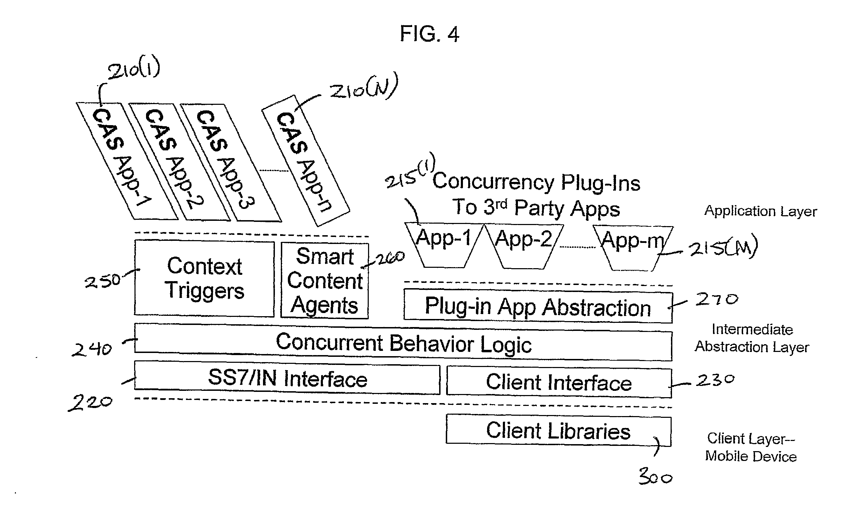

FIG. 4 illustrates an example of a software architecture for the concurrency application system functionality. As mentioned above, at the client layer there is a client library (concurrency application plug-in enabler) 300 that resides in the mobile device 10 that can activate an application while others are already active on the mobile device 10 and can switch an active application between the foregoing and background, either in response to a user control or automatically.

At an intermediate abstraction layer there is a SS7/IN interface function 220 and a client interface function 230. The SS7/IN interface function 220 detects call context information from a mobile device call. Call context parameter information includes, but is not limited to, information such as the mobile device ID, telephone number of the mobile device, the number called by the mobile device, etc., obtained from the MSC and location of the mobile device or other information obtained from or via the GGSN/PDSN 85. In addition, the client interface function 230 receives any special data from the mobile device 10 and delivers concurrency application information or content to the mobile device 10 in the appropriate format depending on the capabilities of the mobile device. There is also a concurrent behavior logic function 240 that maintains a profile data file for each mobile device 10 as to the types of concurrent applications to be provided to a mobile device and parameters associated with the concurrent application, which applications are active or available on a particular mobile device, etc. Next, there are a context triggers function 250 and a smart content agents function 260. The context trigger function 250 determines what type of concurrent applications should be invoked for a mobile device based on the context of the current activity of the mobile device (type of call made, time of day of the call, location of the mobile device when a call is made, calling number of the call, duration of the call in progress, etc.). Other context triggers may be location based, such as the absolute location of a mobile device user as well as the proximity of one mobile device user to another mobile device user. The location information can be absolute GPS-based or relative RFID-based, technologies for which are known in the art and used or will be used in mobile communication networks and services. The smart content agents function 260 activates one or more concurrent applications to retrieve certain content relevant to the context of a mobile device call, under control of the context trigger function 250.

The appropriate one or more CAS applications (CAS App-1 to CAS App-n) 210(1) to 210(N) are called upon by the context trigger and smart content agents functions 250 and 260. In addition, there is a plug-in application abstraction function 270 that interfaces the concurrent behavior logic function 240 with one or more concurrency application plug-ins 215(1) to 215(M).

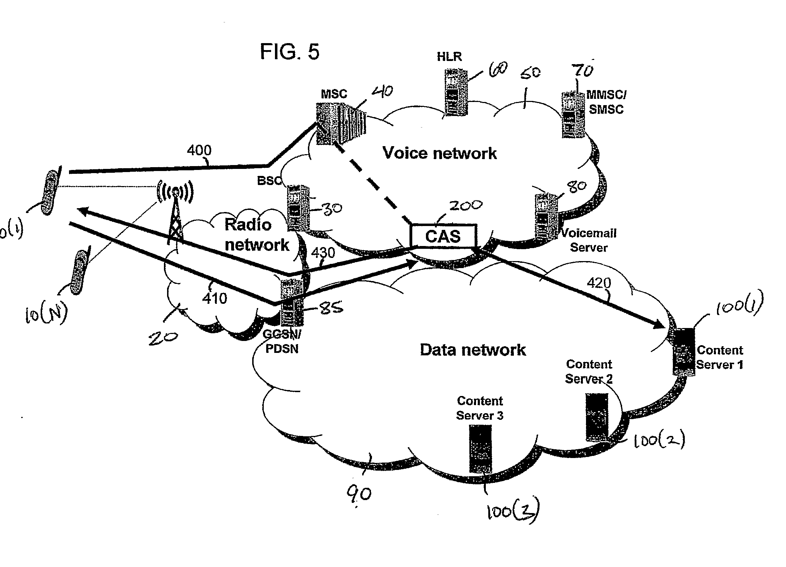

FIG. 5 illustrates data flow for a call context based content delivery application according to one embodiment of the invention. As indicated at 400, the mobile device user places a call that is processed by the MSC and the CAS 200 obtains call context information for the call from the MSC (e.g., called number, calling number, time of day of call, etc.). These context information triggers are obtained via the IN interface of the CAS 200. If location is to be a context trigger as well, the location of the mobile device at the time the call is made is obtained at 410 via the interface of the CAS to the data network via the GGSN/PDSN 85. The CAS 200 uses the call context triggers to retrieve content from various content servers (in the data network) at 420. At 430, the CAS then delivers the retrieved content to the mobile device that made the call, or to another mobile device (the destination of the call or some other mobile device) via either the MSC and through the radio network or via the GGSN/PDSN 85 and through the radio network. The data flow diagram shown in FIG. 5 is applicable to any call context where content may be delivered to the mobile device user based on the context of the call. The call context is used to automatically retrieve useful content (via the WWW for example) and push it to the mobile device user. In the case where the content pushed to the user involves a WWW site of an advertiser or other third party, the CAS 200 also allows the user to browse the site while engaged in the voice call.

It should be understood that the context-based content delivery methods according to embodiments of the present invention are generally applicable to any type of communication session context, not just voice calls. Thus, the term "communication session" is introduced to refer to any type of communication activity that a mobile communication device is capable of. As such, context parameters associated with a communication session of a mobile communication device may further include, but are not limited to, type of mobile gaming application being engaged in or played by mobile communication device user, type of media (audio or video) being streamed to the mobile communication device, type of web site being browsed by the mobile communication device, etc.

Moreover, the content that is delivered to a mobile communication device based on the context parameters of the communication session may include, but is not limited to: text, video, audio, gaming functions, web site content (such as from one or more advertisers), web site links that can be selected by a mobile communication device user, etc. Thus, the term "content" as used herein may include text, video, audio, digital images, website links, website content, electronic coupons, etc.

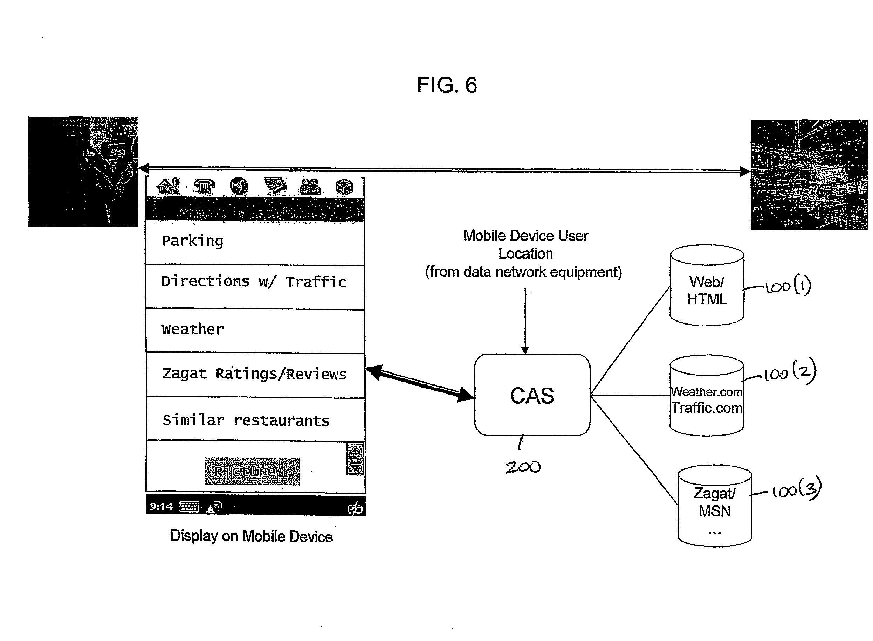

There are numerous examples of context based content retrieval and delivery, some of which are described below in conjunction with FIGs. 6-9.

The scenario of FIG. 6 involves a mobile device user placing a call to a particular commercial entity or business, e.g., a restaurant. The CAS 200 determines the context of the call, i.e., determines that the called phone number is the phone number of a particular restaurant called "Famous Steakhouse" in this example. The CAS 200 presents to the mobile device user choices for one or more additional pieces of information related to that commercial entity (based on the call context information), including, but not limited to: driving directions from the current location of the mobile device user as well as traffic related information, parking availability, a listing of goods or services offered for sale by that entity (e.g., a menu), restaurant reviews, other similar commercial entities (restaurants) in the same general location, on-line reservation services to make a reservation at the restaurant, etc. FIG. 6 shows the content servers 100(1), 100(2) and 100(3), any one or more of which may be called upon by the CAS to provide the content to the mobile device that placed the call. The CAS 200 may keep track of the context (location, time of day calls are made, etc.) of the mobile device user and pre-fetch information for a mobile device user to have it ready to deliver depending on when or where the user is currently active, calls a certain number or requests the information. Thus, the CAS 200 may store data representing communication behavior of a mobile communication user of over a period of time and retrieve content based on the communication behavior to have ready in advance for delivery to the mobile communication device depending on activity associated with the mobile communication device.

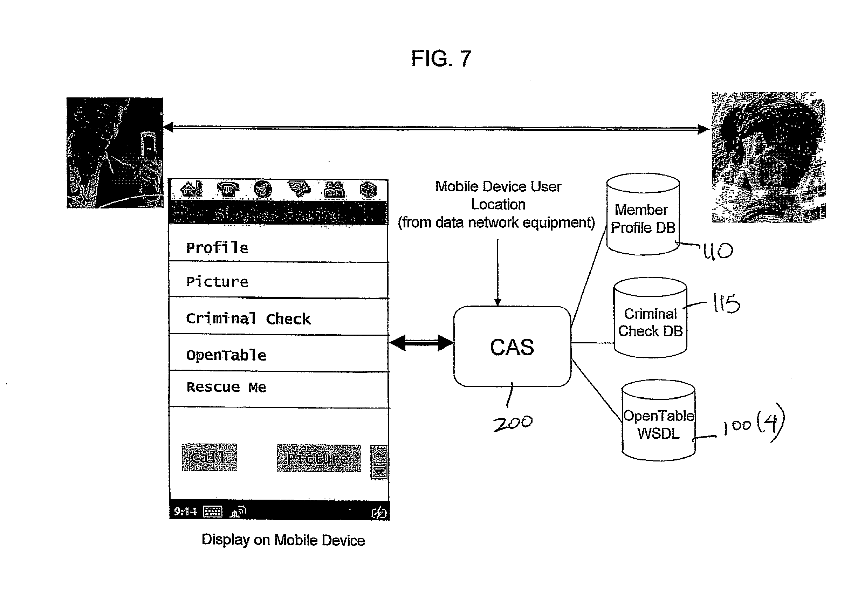

FIG. 7 illustrates an example of a "personals" or "dating" mobile application. In this scenario, mobile device users may subscribe to a real-time mobile "personals" service or social community service, whereby they provide personal profile data to the CAS 200. The CAS maintains this data in a member profile database (DB) 110 and determines when mobile device users with similar or "matching" profiles are in proximity to each other, such as at a restaurant, book store, etc., using the location information already made available by the data network infrastructure. The CAS 200 can then transmit an alert the mobile device users (instant test message, unique icon, audio clip, video clip, etc.) to advise the mobile device users about the proximity of each other and/or push content relevant to the context of personals/dating, such as restaurants in the proximity to the mobile device users, prompts for a mobile device user to make reservations at one of the nearby restaurants via an on-line reservation service managed by content server 100(4), such as OpenTable^{™}, listings of movies playing at nearby theatres, acts at nearby music clubs, etc. In addition, the CAS 200 may also push personal content to the mobile device users, such as physical descriptions, digital photographic images, etc. to enable each mobile device user to consider whether to walk up and meet the other mobile device user. The CAS 200 may make establish a communication session between the mobile device users to enable them to have an instant messaging session, a voice call, etc., if each mobile device user wishes to do so. Furthermore, the CAS 200 may enable such communication session to occur with or without revealing the identity of each user to the other user. The CAS may also retrieve from a criminal records database server 115, if available, background data (e.g., criminal background or other available background information) of a nearby mobile device user that has matching profile data, to push that data to the other mobile device user so that he/she can decide whether they actually want to meet or go on a date with the other mobile device user.

Thus, to summarize the embodiment shown in FIG. 7, A method for establishing communication between at least two mobile communication device users, comprising: storing data comprising personal profile information of each of a plurality of mobile communication device users; monitoring locations of the mobile communication devices; when two or more mobile communication devices are determined to be in close proximity, comparing the personal profile information for the two or more mobile communication device users; transmitting an alert to one of the two or more mobile communication devices when it is determined that the personal profile information indicates potential compatibility of the two or more associated mobile communication device users, wherein the alert indicates to a user of said one mobile communication device about the proximity of a potentially compatible mobile communication device user.

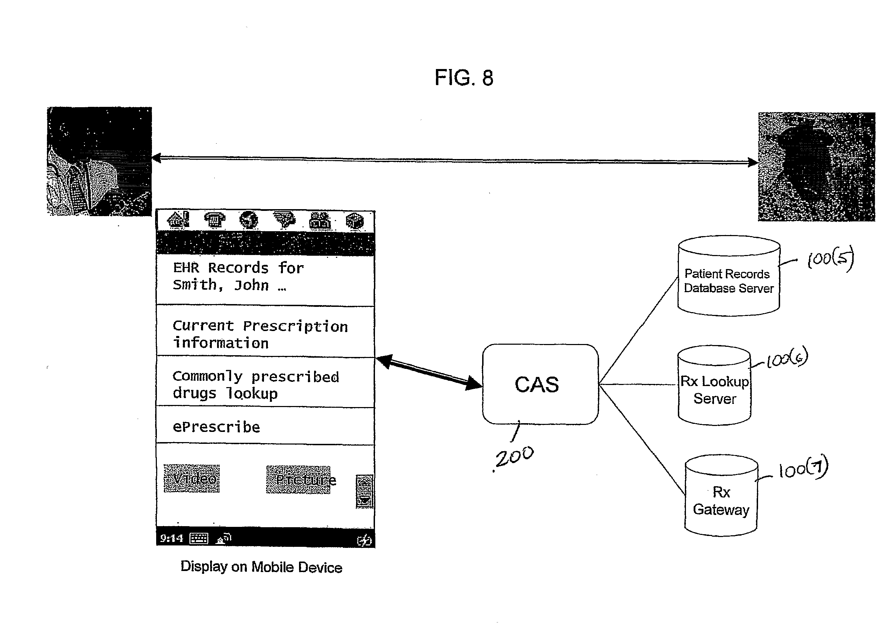

FIG. 8 illustrates an example of a use of a mobile application in the health care context. The CAS 200 connects to a patient records database server 100(5), a prescription (Rx) lookup server 100(6) and an Rx gateway 100(7). In this example, a patient may call a doctor's paging service. When the doctor returns the call (using his mobile device), the calling number is used to automatically retrieve and push content relevant to the patient who the doctor is calling back, such as electronic health records, lag reports, etc., of the patient. Based on the discussion with the patient, the doctor may research one or more drugs by way of the prescription lookup server 100(6) and the doctor may submit a prescription to the appropriate pharmacy by way of the Rx gateway 100(7). Thus, the doctor can consult with the patient, review a patient's medical records, search potentially useful medications, and prescribe medications for the patient with a direct link to an on-line prescription service of the pharmacy (mail order or local) of the patient's choice via the Rx gateway 100(7).

FIG 8 is representative of a more general application whereby content is retrieved that is related to one or more persons associated with a telephone number of landline (or mobile device) that placed a call to a user of a mobile communication device. The mobile communication device user can uses that content for analysis, e.g., diagnosing an illness of a patient who called the doctor (the mobile communication device user). The CAS 200 may also establish communication between the mobile communication device and a commercial entity (e.g., a pharmacy) to enable the user of the mobile communication device (e.g., the doctor) to place an order for goods or services (e.g., a prescription) for the one or more persons (associated with the calling telephone number) with a computing facility (on-line prescription service) or other pharmacy computing facility.

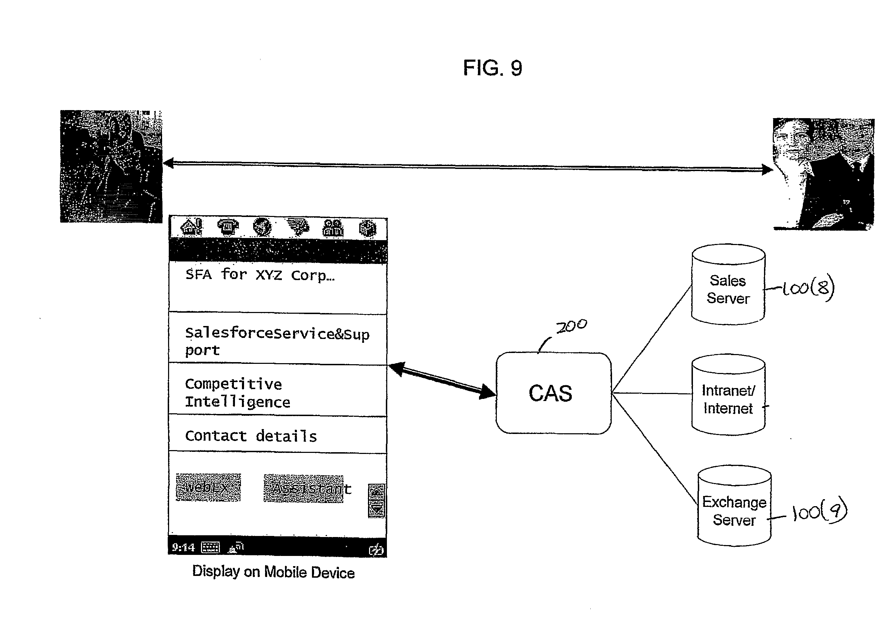

FIG. 9 illustrates an example of a call being made to a sales or support person whereby information about the calling party (e.g., the customer) is retrieved using the calling number to trigger retrieval of information for delivery to the mobile device of the called party, i.e., the sales or support person. The information retrieved by the CAS 200 may be from a third party sales server 100(8) (such as salesforce.com) or from other dedicated internal servers, such as a Microsoft Outlook^{™} exchange server 100(9) Alternatively, in the opposite direction, the sales person may use his/her mobile device to call a customer and the CAS 200 uses the called number to retrieve customer profile information that is delivered to the sales person's mobile device. Thus, according to the embodiment of FIG. 9, the CAS retrieves content related to one or more persons (e.g., a prospective or existing customer) associated with a telephone number of a device that placed a call to a user of the mobile communication device (e.g., a salesperson).

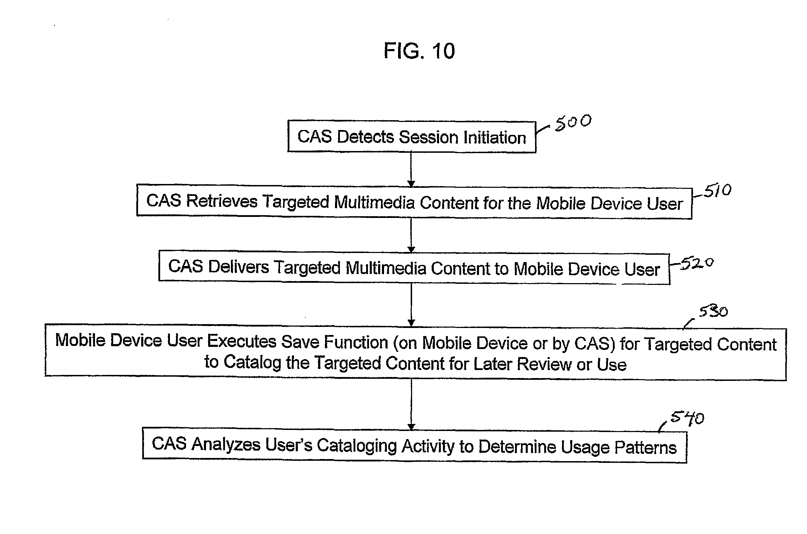

With reference to FIG. 10, in accordance with another embodiment of the invention, there is a further capability provided to insert targeted multimedia content for presentation to a mobile device user in the context of the existing session. The targeted multimedia content includes personalized or tailored targeted advertisements, relevant information (not necessarily of an advertisement nature), video, music, etc. The session in this context may refer to a voice call session, data or "web" session, mobile device "television" session or gaming session.

As shown in FIG. 10, at 500, the CAS detects the initiation of a session by a mobile device user. Again, the session may be a voice call, data or web session, mobile gaming session, etc. Next, at 510 the CAS retrieves targeted multimedia content for the mobile device user based on various criteria including: session information or call context (calling number, called number, mobile television channel being streamed, mobile game being played, geographic location of the mobile device, demographic information of the mobile device user, usage patterns across mobile device users, etc.). The CAS at 520 delivers the targeted multimedia content to the mobile device user. At 530, the mobile device user may then, upon his/her desire, execute a save or catalog function that stores the targeted content on the mobile device itself or at a server facility associated with or connected to the CAS on behalf of the mobile device user for later review or use. Regardless of where the targeted multimedia content is stored or cataloged, the stored information is readily available to the end user for access at a later point in time. The stored content may be time-sensitive in that it may have relevance to a mobile device user only for a certain time period. For example, the targeted content may be specific sale offers or electronic coupons from advertisers, etc., that must be invoked within a particular period of time. The CAS may manage the cataloged targeted content information to automatically delete stored content, such as expired electronic coupons, send communications containing a reminder about the time-sensitive nature of certain stored content to the mobile device users, etc.

At 540, the CAS may analyze the user's cataloging activity of targeted multimedia content to determine usage patterns for the content inserts, ultimately to determine the effectiveness of certain delivered content for generating of retrieving content for future use. For example, the CAS may analyze the cataloging activity to determine: (a) effectiveness of certain targeted content inserts, i.e., the so-called "take rate" in the wireless user community; (b) calling patterns (called numbers that are more effective for content inserts); (c) mobile gaming applications that yield more effectively content inserts; (d) mobile video usage applications that yield more effective content inserts, etc. Thus, the next time a mobile device user (the same mobile device user or a different one) initiates a communication session, the CAS may use the results of such analysis to retrieve more appropriate or successful targeted multimedia content for delivery to the mobile device user.

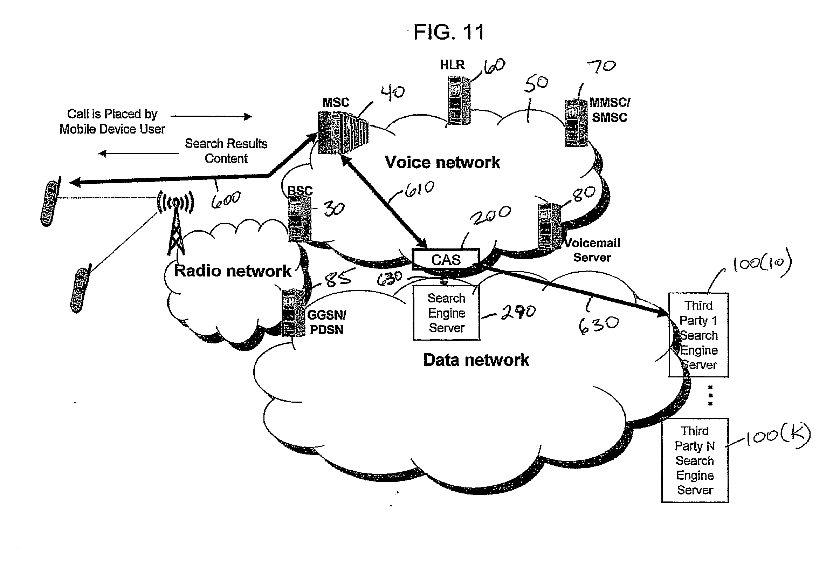

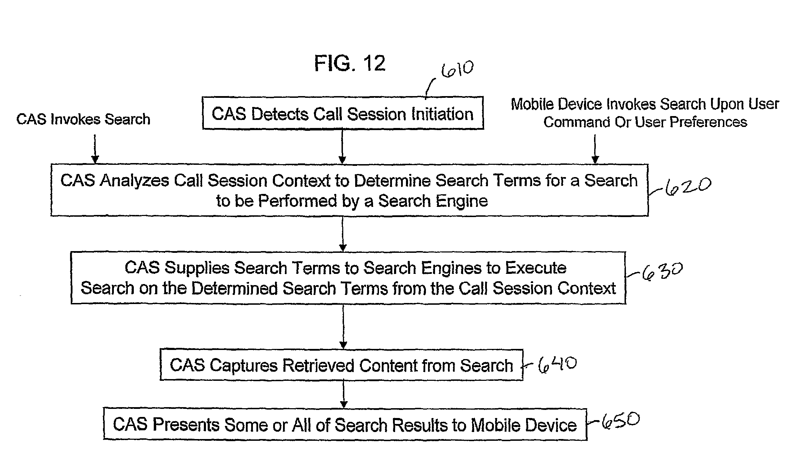

FIG. 11 illustrates data flow for an automated search mobile application according to another embodiment of the invention. FIG. 12 illustrates a flow chart for the corresponding steps that occur in the automated search mobile application. One purpose of the automated search mobile application is to provide the capability for the CAS to automatically determine or derive one or more search terms based on the context of a call session and to invoke a search using a dedicated search engine server, or any one or more of a plurality of third party search engine servers, such as those provided by Google^{™} or Yahoo® to retrieve relevant content and present it to the mobile device user during the call session. The search terms may be a phrase of one or more words or may be one or more "key words" that are derived from the call context. The search terms may be derived or generated from a determination of the type or nature of a commercial or business entity (or the specific commercial entity) that is associated with a telephone number called by a mobile communication device user during a communication session.

As indicated at the top of FIG. 11, the automated search function may be initiated by the CAS 200 when detecting a call session from a mobile device. For example, a mobile device user may establish a preference with the CAS that each time a call is placed to a commercial or business phone number, the CAS should automatically invoke the key word search function. Alternatively, the automated key word search function may be invoked by the mobile device user upon placing the call, such as by the user designating invocation of the function (through a suitable user interface button or control on the mobile device handset) when placing the call.

At 600, a mobile device user places a call that is processed by the MSC 40. The CAS detects initiation of the call session via the MSC and determines the call context session information for the call (e.g., called number, calling number, time of day of call, etc.). These context information triggers are obtained via the IN interface of the CAS. If location is to be a context trigger as well, the location of the mobile device at the time the call is made may also be obtained. Other call context information may include demographic information about the mobile device user (obtained upon account set-up for the mobile device user), time of day of the call, usage patterns across subscribers, and previous communication sessions for that mobile communication device such as previously accessed multimedia content by the mobile device user.

Next, at 620, the CAS 200 analyzes the call context session information to determine or derive one or more (or multiple candidate sets of) key word search terms to be used in a search performed by a search engine. For example, the CAS 200 may examine the called number and determine that it is a particular type of business, e.g., a sporting goods store. The CAS 200 may generate search terms such as "sport goods", "sporting goods", "retail sports", "discount sports". Alternatively, the CAS 200 may learn user preferences from prior user activity or directly from user specified preferences the type of content that is relevant to a particular mobile communication device user. For example, the CAS 200 may learn based on prior calls placed by the mobile device user that the mobile device user is an avid tennis player. In this case, the CAS 200 may generate search terms such as "tennis shop", "discount tennis equipment", etc.

The search engine functionality may be provided by a dedicated search engine server 290 associated with the CAS 200 or by any one or more of a plurality of third party search engines 100(10) to 100(K) as shown in FIG. 11. The mobile device user may establish with the CAS 200 a preference for which of the one or more search engine options should be used when performing this automated key word search process. Alternatively, the preferences for which one or more search engines are used may be based on a combination of commercial relationships between the CAS and the third party search engine providers, and the mobile device user's preferences. In addition, the mobile device user may establish a preference for filtering or prioritizing the content retrieved by the search engine so as to limit or control the content that is ultimately delivered to the mobile device. For example, the mobile device user may choose to receive only content that has the closest relation in terms of current geographical location to the mobile device user.

Next, at 630, the CAS uses the key word search terms and supplies in a suitable search query to the key word search term page of one or more search engines 100(10) to 100(K) or to its dedicated search engine server 290. The dedicated search engine server 290 or the one or more search engine servers 100(10) to 100(K) generate search result content and at 640, the CAS 200 captures the search result content from the search(es) that is/are performed and at 650 the CAS 200 transmits some or all of the search results to the mobile device. If the mobile device user has specified criteria for filtering or prioritizing the retrieved search result content, the CAS 200 will filter or prioritize that content, and then present the filtered content to the mobile device user, still during the call session initiated by the mobile device user.

Thus, there are several embodiments of delivering content to a mobile communication device. According to one embodiment, a method for delivery content to a mobile communication device is provided, comprising detecting a communication session involving a mobile communication device; determining one or more context parameters associated with the communication session; and delivering content related to the context parameters to the mobile communication device while the communication session is ongoing.

Similarly, a system is provided for delivering content to a mobile communication device, comprising: at least one mobile communication device; and a computing device that interfaces with a mobile communication service provider facility with respect to communication sessions engaged by the at least one mobile communication device, wherein the computing device determines context parameters associated with a communication session involving the mobile communication device and delivers content related to the context parameters to the mobile communication device while the communication session is ongoing.

Further still, the functions of the CAS 200 described may be implemented by one or more computers (server computers, desktop computers, etc.) that execute a computer program comprised of instructions stored on a computer readable medium. Accordingly, a computer readable medium storing instructions, that when executed by a computing device, cause the computing device to perform functions for delivering content to a mobile communication device, comprising: detecting a communication session involving a mobile communication device; determining context parameters associated with the communication session; and delivering content related to the context parameters to the mobile communication device while the communication session is ongoing.

According to another embodiment of the invention, a method is provide for establishing communication between at least two mobile communication device users, comprising: storing data comprising personal profile information of each of a plurality of mobile communication device users; monitoring locations of the mobile communication devices; when two or more mobile communication devices are determined to be in close proximity, comparing the personal profile information for the two or more mobile communication device users; and transmitting an alert to one of the two or more mobile communication devices when it is determined that the personal profile information indicates potential compatibility of the two or more associated mobile communication device users, wherein the alert indicates to a user of said one mobile communication device about the proximity of a potentially compatible mobile communication device user.

According to still a further embodiment, a method is provided for providing multiple concurrent application services to a mobile communication device, comprising: receiving a call from a mobile communication at a mobile communication service provider facility; determining a context of the call made by the mobile communication device, the context including one or more of: time of the call, called number, calling number, identifier of the mobile communication device, and location of the mobile communication device when the call is made; retrieving data pertaining to the context of the call; and transmitting the data to the mobile communication device while the mobile device user is engaged in the call.

Further still, according to another embodiment, a method is provided for delivering content to a mobile communication device, comprising: determining one or more search terms based on a context of a call placed by a mobile communication device; executing a search for content based on the search terms; and presenting content resulting from the search to the mobile device.

The device and methods described herein may be embodied in other specific forms without departing from the spirit or essential characteristics thereof. The foregoing embodiments are therefore to be considered in all respects illustrative and not meant to be limiting.

Some further aspects and features of the invention are set out below.

The invention also provides a method for delivering content to a mobile communication device, comprising: detecting a communication session involving a mobile communication device; determining one or more context parameters associated with the communication session; and delivering content related to the context parameters to the mobile communication device while the communication session is ongoing. Determining may comprise determining one or more of: a calling number associated with a voice call, time of day of the voice call, a called number associated with a voice call, type of mobile game being played by a user of the mobile communication device, geographic location of the mobile communication device, type of media being streamed to the mobile communication device, type of web site contacted or being browsed by the mobile communication device in the communication session.

The method may comprise generating content that is related to the context parameters or retrieving content that is related to the context parameters. The content may be time-sensitive. The method may comprise communicating to the mobile communication device a reminder about the time-sensitive nature of the content, and may comprise deleting the content from the mobile communication device or from a storage facility upon expiration of a time period. The method may comprise, in response to a command by a user of the mobile communication device, storing the content in the mobile communication device or in a server facility for retrieval and delivery to the mobile communication device at a later time. The method may comprise analyzing data associated with content delivered to the mobile communication devices for which a user commanded storage of the content. Analyzing may comprise analyzing effectiveness of content delivered to mobile communication devices. The method may comprise generating or retrieving content that is more likely to be effective based on said analyzing for delivery to the mobile communication device. Analyzing may comprise analyzing patterns associated with voice calls made by the mobile communication devices with respect to effectiveness of content delivered to the mobile communication devices.

Determining may comprise determining a type of commercial or business entity is associated with a telephone number called by a user of the mobile communication device during said communication session. Said communication session may be a voice call, and determining may comprise determining a type of commercial or business entity associated with a telephone number called by a user of the mobile communication device, and the method may further comprise generating search terms for use by a search engine to retrieve content to be delivered to the communication device. The method may comprise generating search terms from the context parameters, wherein the search terms are for use by a search engine in order to retrieve content to be delivered to the mobile communication device. Generating may comprise generating search terms from the context parameters for the communication session and based further on previous communication sessions associated with the mobile communication device. The method may comprise sending the search terms to a search engine for conducting a search, and retrieving results of the search, wherein the content delivered to the mobile communication device contains or is derived from the results of the search.

Determining may comprise determining the commercial entity associated with a telephone number called by a user of the mobile communication device during said communication session, and may further comprise retrieving content containing information related to the commercial entity for delivery to the mobile communication device. Retrieving may comprise retrieving one or more of: driving directions to the commercial entity, a listing of goods or services offered for sale by the commercial entity, other similar commercial entities in the same general location, and on-line reservation services.

The method may comprise storing data representing communication behavior of a user of the mobile communication device over a period of time, and retrieving content based on the communication behavior to have ready in advance for delivery to the mobile communication device depending on activity associated with the mobile communication device. The method may comprise retrieving content related to one or more persons associated with a telephone number of a device that placed a call to a user of the mobile communication device, and establishing communication between the mobile communication device and a commercial entity to enable the user of the mobile communication device to place an order for goods or services to the one or more persons. Retrieving may comprise retrieving medical information for one or more persons associated with the telephone number, and wherein establishing comprises connecting the mobile communication device to a computing facility associated with a pharmacy to enable the user to place an order for a prescription for the one or more persons. The method may comprise retrieving content related to one or more persons associated with a telephone number of a device that placed a call to a user of the mobile communication device.

The invention also provides a method for establishing communication between at least two mobile communication device users, comprising: storing data comprising personal profile information of each of a plurality of mobile communication device users; monitoring locations of the mobile communication devices; when two or more mobile communication devices are determined to be in close proximity, comparing the personal profile information for the two or more mobile communication device users; and transmitting an alert to one of the two or more mobile communication devices when it is determined that the personal profile information indicates potential compatibility of the two or more associated mobile communication device users, wherein the alert indicates to a user of said one mobile communication device about the proximity of a potentially compatible mobile communication device user. The method may comprise transmitting content to said one mobile communication device that is related to encouraging shared activity between the two or more mobile communication device users. The method may comprise retrieving content pertaining to one or more options for venues for the shared activity. The method may comprise transmitting to said one mobile communication device part of the personal profile information of a user of the other of said two or more mobile communication devices.

The method may comprise transmitting to said one mobile communication device a message containing a physical description of a user associated with the other of said two or more mobile communication devices. The method may comprise transmitting to said one mobile communication device a digital photographic image of a user associated with the other of said two or more mobile communication devices. The method may comprise establishing a communication session between two more mobile communication devices upon receiving an indication from each user of the mobile communication device of a desired to do so.

The method may comprise retrieving from a background information source background information pertaining to a user of one of the two or more mobile communication devices, and transmitting the background information to said one mobile communication device.

The invention also provides a system for delivering content to a mobile communication device, comprising: at least one mobile communication device; and a computing device that interfaces with a mobile communication service provider facility with respect to communication sessions engaged by the at least one mobile communication device, wherein the computing device determines context parameters associated with a communication session involving the mobile communication device and delivers content related to the context parameters to the mobile communication device while the communication session is ongoing. The computing device may determine, for the communication session, one or more of: a calling number associated with a voice call, time of day of the voice call, a called number associated with a voice call, type of mobile game being played by a user of the mobile communication device, geographic location of the mobile communication device, type of media being streamed to the mobile communication device, type of web site contacted or being browsed by the mobile communication device in the communication session. The computing device may analyze data associated with content delivered to a plurality of mobile communication devices for which associated users commanded storage of the content. The computing device may analyze effectiveness of content delivered to mobile communication devices. The computing device may generate or retrieve content that is more likely to be effective based on the analysis.

Said communication session may be a voice call, and wherein the computing device determines a type of commercial or business entity associated with a telephone number called by a user of the mobile communication device, and generates search terms for use by a search engine to retrieve content to be delivered to the communication device. The computing device may generate search terms from the context parameters, wherein the search terms are for use by a search engine in order to retrieve content to be delivered to the mobile communication device. The computing device may generate the search terms from the context parameters for the communication session and based further on previous communication sessions associated with the mobile communication device.

The invention also provides a computer readable medium storing instructions, that when executed by a computing device, cause the computing device to perform functions for delivering content to a mobile communication device, comprising: detecting a communication session involving a mobile communication device; determining context parameters associated with the communication session; and delivering content related to the context parameters to the mobile communication device while the communication session is ongoing.

The invention also provides a method for providing multiple concurrent application services to a mobile communication device, comprising: receiving a call from a mobile communication at a mobile communication service provider facility; determining a context of the call made by the mobile communication device, the context including one or more of: time of the call, called number, calling number, identifier of the mobile communication device, and location of the mobile communication device when the call is made; retrieving data pertaining to the context of the call; and transmitting the data to the mobile communication device while the mobile device user is engaged in the call. The method may comprise browsing through the data at the mobile communication device.

The invention also provides a method for delivering content to a mobile communication device, comprising: determining one or more search terms based on a context of a call placed by a mobile communication device; executing a search for content based on the search terms; and presenting content resulting from the search to the mobile device. The method may comprise determining said context of the call based on one or more of: (i) calling number of the mobile communication device; (ii) called number of the call; (iii) geographic location of the mobile device; (iv) demographic information associated with a user of the mobile communication device; (v) and communication session patterns across multiple communication device users;

Step (c), presenting, may comprise transmitting the content resulting from the search to the mobile communication device for display or sounding on the mobile communication device. Step (b), executing, may comprise supplying the search terms to a search engine server that conducts the search for content based on the supplied search terms. Step (b), executing, may comprise supplying the search terms to a plurality of search engine servers each of which conducts the search for content based on the supplied search terms. The method may comprise filtering the content resulting from the search prior to presenting it to the mobile device. The method may comprise prioritizing the order in which the content is presented to the mobile device. The method may comprise storing preference information for a user of the mobile device for one or more search engines to be used for conducting the search. Determining the one or more search terms may comprise determining one or more key word search terms based on the context of the call.

## Claims

1. A method for establishing communication between at least two mobile communication device users, comprising:
a. storing data comprising personal profile information of each of a plurality of mobile communication device users;
b. monitoring locations of the mobile communication devices;
c. when two or more mobile communication devices are determined to be in close proximity, comparing the personal profile information for the two or more mobile communication device users; and
d. transmitting an alert to at least one of the two or more mobile communication devices when the comparison indicates a match between personal profile information of the two or more associated mobile communication device users, wherein the alert indicates to a user of said at least one mobile communication device about the proximity of a mobile communication device user with matching profile information.

2. The method of claim 1, and further comprising transmitting content to said one mobile communication device that is related to encouraging shared activity between the two or more mobile communication device users.

3. The method of claim 2, and further comprising retrieving content pertaining to one or more options for venues for the shared activity.

4. The method of claim 1, and further comprising transmitting to said one mobile communication device part of the personal profile information of a user of the other of said two or more mobile communication devices.

5. The method of claim 4, and further comprising transmitting to said one mobile communication device a message containing a physical description of a user associated with the other of said two or more mobile communication devices.

6. The method of claim 5, and further comprising transmitting to said one mobile communication device a digital photographic image of a user associated with the other of said two or more mobile communication devices.

7. The method of claim 1, and further comprising establishing a communication session between two more mobile communication devices upon receiving an indication from each user of the mobile communication device of a desired to do so.

8. The method of claim 1, and further comprising retrieving from a background information source background information pertaining to a user of one of the two or more mobile communication devices, and transmitting the background information to said one mobile communication device.

9. The method of claim 1, wherein matching profile information indicates potential compatibility of the two or more associated mobile communication device users.

10. A computer program or computer program product for establishing communication between at least two mobile communication device users, comprising software code adapted, when executed on a data processing apparatus, to perform the steps of:
a. storing data comprising personal profile information of each of a plurality of mobile communication device users;
b. monitoring locations of the mobile communication devices;
c. when two or more mobile communication devices are determined to be in close proximity, comparing the personal profile information for the two or more mobile communication device users; and
d. transmitting an alert to at least one of the two or more mobile communication devices when the comparison indicates a match between personal profile information of the two or more associated mobile communication device users, wherein the alert indicates to a user of said at least one mobile communication device about the proximity of a mobile communication device user with matching profile information.

11. A computer program or computer program product according to claim 10, wherein the software code is further adapted to perform a method as claimed in any of claims 2 to 9.

12. A system for establishing communication between at least two mobile communication device users, comprising:
a. means for storing data comprising personal profile information of each of a plurality of mobile communication device users;
b. means for monitoring locations of the mobile communication devices;
c. means for comparing, when two or more mobile communication devices are determined to be in close proximity, the personal profile information for the two or more mobile communication device users; and
d. means for transmitting an alert to at least one of the two or more mobile communication devices when the comparison indicates a match between personal profile information of the two or more associated mobile communication device users, wherein the alert indicates to a user of said at least one mobile communication device about the proximity of a mobile communication device user with matching profile information.

13. A system according to claim 12, further comprising means for performing a method as claimed in any of claims 2 to 9.
